# NEUE EUROPÄISCHE PATENTSCHRIFT

(11) **EP 4 139 023 B2**
(45) Veröffentlichungstag und Bekanntmachung des Hinweises auf die Entscheidung über den Einspruch: **21.10.2026**
(45) Hinweis auf die Patenterteilung: 10.01.2024
(21) Anmeldenummer: 21721427.9
(22) Anmeldetag: 21.04.2021
(51) Int. Cl.: B01D 46/00, B01D 46/10, B01D 46/52, B60H 3/06

(54) **FILTERELEMENT FÜR EINE LUFTFILTEREINRICHTUNG EINES KRAFTWAGENS UND LUFTFILTEREINRICHTUNG**
FILTER ELEMENT FOR AN AIR FILTER DEVICE IN A MOTOR VEHICLE, AND AIR FILTER DEVICE
ÉLÉMENT FILTRANT POUR UN DISPOSITIF DE FILTRE À AIR DANS UN VÉHICULE À MOTEUR ET DISPOSITIF DE FILTRE À AIR

(30) Priorität: 22.04.2020 DE 102020110940
(43) Veröffentlichungstag der Anmeldung: 01.03.2023
(73) Patentinhaber: Mercedes-Benz Group AG, 70372 Stuttgart (DE)
(72) Erfinder: SCHUMACHER, Eric, 70565 Stuttgart (DE)
(74) Vertreter: Hofstetter, Schurack & Partner
(86) Internationale Anmeldenummer: PCT/EP2021/060298
(87) Internationale Veröffentlichungsnummer: WO 2021/214094

(56) Entgegenhaltungen:
- EP-A1- 2 692 559
- WO-A1-2019/030157
- DE-A1- 102017 007 497

## Beschreibung

Die Erfindung betrifft ein Filterelement für eine Luftfiltereinrichtung eines Kraftwagens, mit einem Rahmen, welcher ein Filtermaterial der zumindest bereichsweise umgibt. Der Rahmen umfasst eine elastisch verformbare Frontwand, welche sich im Wesentlichen senkrecht zu einer Einführrichtung erstreckt. In die Einführrichtung ist das Filterelement in einen Aufnahmeraum eines Gehäuses der Luftfiltereinrichtung einführbar. An dem Rahmen ist wenigstens ein Befestigungselement angeordnet. An dem wenigstens einen Befestigungselement ist ein Deckel der Luftfiltereinrichtung festlegbar, welcher zum Verschließen des Aufnahmeraums ausgebildet ist. Des Weiteren betrifft die Erfindung eine Luftfiltereinrichtung mit einem solchen Filterelement.

Die DE 10 2017 007 497 A1 beschreibt ein Filterelement für eine Luftfiltereinrichtung eines Kraftwagens, bei welchem ein Filtermaterial von einem Rahmen eingefasst ist. Der Rahmen weist eine Frontwand auf, welche sich senkrecht zu einer Einführrichtung erstreckt, in welche das Filterelement in ein Gehäuse der Luftfiltereinrichtung eingeführt wird. An beiden senkrecht zu der Einführrichtung einander gegenüberliegenden Seiten der Frontwand sind jeweilige Befestigungselemente angeordnet, welche über einen Verbindungssteg mit der Frontwand verbunden sind. In den Befestigungselementen sind Durchtrittsöffnungen ausgebildet, in welche Verriegelungsstifte eingeführt werden. Die Verriegelungsstifte sind an einem Deckel des Luftfiltergehäuses drehbar angeordnet. Wenn das Filterelement in das Luftfiltergehäuse eingebaut ist, können die Verriegelungsstifte durch die Durchtrittsöffnungen hindurchgeführt und verdreht werden, sodass der Deckel an dem Gehäuse festgelegt und somit das Gehäuse verschlossen wird. Die Frontwand kann elastisch verformt beziehungsweise zusammengestaucht werden, um das Filterelement in das Gehäuse einzubringen. Zum Zwecke dieses Zusammenstauchens der Frontwand sind an den Befestigungselementen jeweilige Betätigungslaschen angeordnet, welche aufeinander zu bewegt werden können. Bei auf diese Weise elastisch verformter Frontwand kann das Filterelement in das Gehäuse eingeschoben werden. Wenn dann die Betätigungslaschen wieder losgelassen werden, so hintergreifen die Befestigungselemente Stege, welche an jeweiligen Wänden des Gehäuses ausgebildet sind.

Eine derartige Ausgestaltung des Filterelements bringt es mit sich, dass zum elastischen Verformen der Frontwand von außen auf beide Betätigungslaschen gleichzeitig ein Druck aufgebracht werden muss, während das an dem Rahmen gehaltene Filterelement in das Gehäuse eingeführt wird. Das macht die Handhabung des Filterelements etwas mühselig.

Aufgabe der vorliegenden Erfindung ist es daher, ein Filterelement der eingangs genannten Art zu schaffen, welches sich besonders einfach in ein Gehäuse einer Luftfiltereinrichtung einbauen lässt, und eine Luftfiltereinrichtung mit einem solchen Filterelement anzugeben.

Diese Aufgabe wird durch ein Filterelement mit den Merkmalen des Patentanspruchs 1 und durch eine Luftfiltereinrichtung mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Das erfindungsgemäße Filterelement für eine Luftfiltereinrichtung eines Kraftwagens weist einen Rahmen auf, welcher ein Filtermaterial des Filterelements zumindest bereichsweise umgibt. Der Rahmen umfasst eine elastisch verformbare Frontwand. Die Frontwand erstreckt sich senkrecht zu einer Einführrichtung, in welche das Filterelement in einen Aufnahmeraum eines Gehäuses der Luftfiltereinrichtung - im Weiteren auch als "Luftfiltergehäuse" oder "Gehäuse" bezeichnet - einführbar ist. An dem Rahmen ist wenigstens ein Befestigungselement angeordnet. An dem wenigstens einen Befestigungselement ist ein Deckel der Luftfiltereinrichtung festlegbar, welcher zum Verschließen des Aufnahmeraums ausgebildet ist. Des Weiteren ist an dem Rahmen wenigstens eine Einführschräge ausgebildet, mittels welcher beim Einführen des Filterelements in den Aufnahmeraum ein Verbringen der Frontwand in einen elastisch verformten Zustand bewirkbar ist. In dem elastisch verformten Zustand ist eine Längserstreckung der Frontwand geringer als in einem Ausgangszustand der Frontwand, in welchem die Frontwand nicht verformt ist, und kann aufgrund dieser Eigenschaft durch eine - gegenüber der Frontwand des Filterelements - engere Gehäuseöffnung hinterschnittig in dem Aufnahmeraum des Gehäuses gehalten werden.

Das einstückig mit der Einführschräge ausgebildete Befestigungselement ist durch ein in sich starres Bauteil bereitgestellt, welches im Bereich der Frontwand an dem Rahmen des Filterelements angebracht ist. So wird einerseits beim Einschieben des Filterelements durch die Gehäuseöffnung in den Aufnahmeraum eine auf die Einführschräge aufgebrachte Kraft unmittelbar für das elastische Verformen der Frontwand eingesetzt, und andererseits kann mit dem Befestigungselement gut ein Verschlusselement zusammenwirken, welches für das Anbringen oder Halten des Deckels an dem Luftfiltergehäuse sorgt.

Die an dem Rahmen ausgebildete Einführschräge sorgt also beim Einschieben des Filterelements in den Aufnahmeraum des automatisch für das elastische Verformen der Frontwand, die, sobald das Filterelement seine Einbauposition erreicht hat, wieder in ihre ursprüngliche Gestalt zurückspringt, wodurch das Filterelement im Gehäuse hinterschnittig gehalten ist. Es werden keine besonderen Betätigungslaschen oder dergleichen benötigt, um die Frontwand in Längsrichtung, die senkrecht zur Einführrichtung und senkrecht zur Höhe der Frontwand verläuft, zusammenzustauchen bzw. elastisch zu verformen. Vielmehr ist es ausreichend, das Filterelement in die Einführrichtung in den Aufnahmeraum einzuschieben, wobei dann die Einführschräge die elastische Verformung der Frontwand bewirkt. Denn die beim Einführen bzw. Einschieben in das Luftfiltergehäuse auf die Einführschräge wirkende Kraft sorgt zwangsläufig für das Verbringen der Frontwand in den elastisch verformten Zustand. Folglich lässt sich das Filterelement einfach in das Gehäuse einbauen und darin sichern.

Von Vorteil ist bei dem die wenigstens eine Einführschräge aufweisenden Filterelement insbesondere, dass die Luftfiltereinrichtung des Kraftwagens nur dann betrieben werden kann, wenn das Filterelement in den Aufnahmeraum eingebaut beziehungsweise eingebracht ist. Denn zum Festlegen des Deckels der Luftfiltereinrichtung an dem Luftfiltergehäuse ist das wenigstens eine Befestigungselement erforderlich, welcher Bestandteil des Filterelements ist. Mit anderen Worten ist ein Anbringen des Deckels am Gehäuse nicht möglich, wenn das Filterelement nicht in den Aufnahmeraum des Gehäuses eingebracht ist. Dadurch kann verhindert werden, dass die Luftfiltereinrichtung unsachgemäß betrieben wird.

Dadurch, dass das wenigstens eine Befestigungselement einstückig mit der Einführschräge ausgebildet ist, ist gleichzeitig dafür gesorgt, dass das wenigstens eine Befestigungselement lagerichtig für das Montieren oder Anbringen des Deckels an dem Luftfiltergehäuse ausgerichtet ist, sobald das Filterelement in seine bezüglich des Gehäuses hinterschnittige Einbauposition verbracht ist.

Für ein sicheres Anbringen des Deckels am Luftfiltergehäuse ist es ausreichend, wenn an dem Rahmen des Filterelements lediglich ein beziehungsweise genau ein Befestigungselement angeordnet ist, welches dem Befestigen oder Festlegen des Deckels dient. Dies vereinfacht auch das Anbringen des Deckels an dem Gehäuse, da nur ein Verschlusselement mit dem Befestigungselement zusammenzuwirken braucht, um mittels des Deckels den Aufnahmeraum zu verschließen. Das Filterelement kann dabei so eingesetzt werden, dass es zuerst mit der zur Seitenwand des Rahmens, welche die Einführschräge und das Befestigungselement tragende Bauteil aufweist, gegenüberliegenden Seite schräg durch die Gehäuseöffnung in den Aufnahmeraum eingeschoben wird und hinter einen Gehäusevorsprung gesichert wird, und sodann die Ecke mit der Einführschräge in den Aufnahmeraum geschoben wird.

Bei dem erfindungsgemäßen Filterelement ist vorgesehen, dass das Befestigungselement entgegen der Einführrichtung von der Frontwand absteht. Dies gewährleistet eine gute Zugänglichkeit des Befestigungselements für ein Verschlusselement des Deckels. Insbesondere kann das Befestigungselement von dem Verschlusselement des Deckels umgriffen werden.

Vorzugsweise weist die Einführschräge eine Keilform auf, aufgrund welcher die Einführschräge in einem der Frontwand nahen Endbereich eine größere Breite in Richtung der Längserstreckung der Frontwand aufweist als in einem der Frontwand fernen Endbereich der Einführschräge, die durch wenigstens eine schräg zu einer Seitenwand des Rahmens ausgerichtete Führungsflanke gebildet wird. Durch eine derartige, keilförmige Einführschräge lässt sich effektiv das elastische Verformen der Frontwand beim Einführen des Filterelements in den Aufnahmeraum bewirken. Denn die keilförmige Einführschräge ist in sich starr ausgebildet, was bewirkt, dass eine Kraft, welche etwa auf wenigstens eine schräg ausgerichtete Führungsflanke der Einführschräge einwirkt, zuverlässig zu einer Verformung - beziehungsweise einem Nachgeben - der elastischen Frontwand führt.

Vorzugsweise weist das die Einführschräge und das Befestigungselement umfassende Bauteil einen Anlageflansch auf, welcher an der Frontwand anliegt, sowie ein Basisteil, welches an der Seitenwand des Rahmens anliegt. Durch die flächige Verbindung des Bauteils an Front- und Seitenwand wird eine stabile Verbindung mit dem Filterelement, beziehungsweise mit dem Rahmen des Filterelements, gewährleistet. Somit ist die Anordnung robust gegen die Beaufschlagung - einerseits der Einführschräge andererseits des Befestigungselements - mit Kräften.

Vorzugsweise umfasst die Einführschräge ein Versteifungselement, welches zwischen dem Basisteil und der wenigstens einen Führungsflanke der Einführschräge angeordnet ist. Dadurch erhält die Einführschräge bei filigraner Bauart in materialsparender Weise die notwendige Steifigkeit.

Vorzugsweise weist die Einführschräge eine Stirnseite auf, durch welche ein Widerlager bereitgestellt ist. Das Widerlager ist bei in den Aufnahmeraum eingebrachtem Filterelement zum Hintergreifen eines Halteelements des Luftfiltergehäuses ausgebildet. So kann sichergestellt werden, dass dann, wenn das Halteelement des Gehäuses an dem Widerlager anliegt, das Filterelement nicht ungewollt aus dem Aufnahmeraum entfernt werden kann.

Dies ist insbesondere dann von Vorteil, wenn das Filterelement über Kopf verbaut werden soll, also entgegen der Schwerkraft in den Aufnahmeraum einzuführen ist. Denn dann sorgt das durch die Stirnseite der Einführschräge bereitgestellte Widerlager dafür, dass das in dem Aufnahmeraum angeordnete Filterelement sich nicht aufgrund der Schwerkraft wieder aus dem Aufnahmeraum herausbewegt. Das Filterelement braucht also nicht händisch oder mittels eines anderweitigen Behelfs fixiert zu werden, bevor der Deckel an dem Gehäuse angebracht wird. Vielmehr sichert die hinterschnittige Anlage des Widerlagers an dem Halteelement das Filterelement bereits in ihrer Lage in dem Aufnahmeraum, während anschließend der Deckel an dem Befestigungselement fixiert oder festgelegt wird, um den Aufnahmeraum zu verschließen.

Eine besonders kompakte Ausgestaltung des Filterelements ist erreichbar, wenn die Stirnseite der Einführschräge mit der Frontwand fluchtet. Zudem leitet dann die Einführschräge sehr unmittelbar die Kraft in die Frontwand ein, welche das elastische Verformen der Frontwand bewirkt.

Als weiter vorteilhaft hat es sich als gezeigt, wenn das wenigstens eine Befestigungselement zumindest ein Halteteil aufweist, welches bei an dem Luftfiltergehäuse festgelegtem Deckel von einem korrespondierenden Halteteil des Deckels hintergriffen ist. So ist eine sehr sichere Festlegung des Deckels an dem Gehäuse mittels des wenigstens einen Befestigungselements erreichbar.

Das wenigstens eine Halteteil kann insbesondere nach Art eines parallel zu der Frontwand von einem Grundköper des Befestigungselements abstehender Steg oder Flügel ausgebildet sein, welcher von dem korrespondierenden Halteteil des Deckels hintergriffen werden kann. Denn ein derartiger Flügel ist sehr gut für das korrespondierende Halteteil zugänglich.

Insbesondere, wenn ein derartiger Flügel in einem Endbereich eine rampenförmige Gestalt aufweist, an welcher das korrespondierende Halteteil beim Festlegen des Deckels entlang bewegt wird, kann eine sehr dicht sitzende Anlage des Deckels an dem Gehäuse erreicht werden.

Die erfindungsgemäße Luftfiltereinrichtung für einen Kraftwagen weist ein erfindungsgemäßes Filterelement auf, wobei das Filterelement in einen Aufnahmeraum eingebracht ist, welcher in einem Gehäuse der Luftfiltereinrichtung ausgebildet ist.

Die Luftfiltereinrichtung kann insbesondere als Luftfiltereinrichtung einer Klimaanlage beziehungsweise Belüftungseinrichtung des Kraftwagens ausgebildet sein. Des Weiteren kann die Luftfiltereinrichtung für einen Ansaugtrakt eines Verbrennungsmotors des Kraftwagens vorgesehen sein, also als Filter für die von einem Verbrennungsmotor angesaugte Luft.

Vorzugsweise ist der Aufnahmeraum mittels eines Deckels der Luftfiltereinrichtung verschließbar, wobei der Deckel an dem wenigstens einen Befestigungselement des Filterelements festlegbar ist. Auf diese Weise ist sichergestellt, dass nur bei korrekt in das Luftfiltergehäuse eingebautem Filterelement der Aufnahmeraum mittels des Deckels verschlossen werden kann.

Vorzugsweise ist an wenigstens einer Gehäusewand des Gehäuses eine Aufnahme ausgebildet, in welcher das wenigstens eine Befestigungselement aufgenommen ist. Hierbei umfasst die Aufnahme ein Halteelement, welches an einer Stirnseite der Einführschräge des Filterelements anliegt. Indem also bei in den Aufnahmeraum des Gehäuses eingebrachtem bzw. eingeschobenem Filterelement die Stirnseite, genauer gesagt, der das Widerlager der Einführschräge bildende Teil der Stirnseite, von dem Halteelement der Aufnahme hintergriffen ist, ist eine Vorfixierung des Filterelements in dem Aufnahmeraum des Gehäuses erreicht. Das Filterelement kann also nicht unbeabsichtigt aus dem Aufnahmeraum herausgelangen.

Dies ist insbesondere dann von Bedeutung, wenn das Filterelement beim Einbauen in das Gehäuse entgegen der Schwerkraft in den Aufnahmeraum eingebracht wird, welcher in dem Luftfiltergehäuse ausgebildet ist. Ein Verbau des Filterelements über Kopf ist so nämlich auf besonders einfache Art und Weise ermöglicht.

Vorzugsweise weist der Deckel ein Verschlusselement auf, welches relativ zu einem Grundköper des Deckels drehbar ist. Hierbei hintergreift in einer Schließstellung des Verschlusselements wenigstens ein Halteteil des Verschlusselements ein korrespondierendes Halteteil des Befestigungselements. Auf diese Weise ist eine besonders sichere Fixierung des Deckels an dem Gehäuse aufgrund des Zusammenwirkens des Verschlusselements mit dem Befestigungselement erreichbar. Insbesondere kann das Verschlusselement nach Art eines Drehverschlusses ausgebildet sein.

Die für das erfindungsgemäße Filterelement beschriebenen Vorteile und bevorzugten Ausführungsformen gelten auch für die erfindungsgemäße Luftfiltereinrichtung und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: in einer schematischen Perspektivansicht ein Filterelement für eine Luftfiltereinrichtung eines Kraftwagens;
- Fig. 2: in einer vergrößerten Detailansicht und ausschnittsweise einen Bereich eines Rahmens des Filterelements, in welchem ein Bauteil an dem Rahmen angeordnet ist, durch welches eine Einführschräge und ein Befestigungselement bereitgestellt sind,
- Fig. 3: in einer vergrößerten Perspektivansicht das in Fig. 2 gezeigte Bauteil;
- Fig. 4: das elastische Verformen einer Frontwand des Rahmens des Filterelements aufgrund einer Beaufschlagung des Bauteils mit einer Kraft von der Seite her;
- Fig. 5: ausschnittsweise und perspektivisch ein Luftfiltergehäuse, in welches das Filterelement gemäß Fig. 1 eingeschoben werden kann;
- Fig. 6: in einer teilweise geschnittenen Ansicht einen Ausschnitt des Gehäuses gemäß Fig. 5;
- Fig. 7: ausschnittsweise einen Deckel der Luftfiltereinrichtung, mittels welchem ein in dem Gehäuse gemäß Fig. 5 ausgebildeter Aufnahmeraum für das Filterelement gemäß Fig. 1 verschlossen werden kann;
- Fig. 8: eine vergrößerte Ansicht auf eine Unterseite des Deckels gemäß Fig. 7;
- Fig. 9: in einer teilweise geschnittenen Perspektivansicht einen ersten Schritt während eines Einführens des Filterelements gemäß Fig. 1 in das Gehäuse gemäß Fig. 5;
- Fig. 10: in einer teilweise geschnittenen Perspektivansicht einen zweiten Schritt beim Einführen des Filterelements gemäß Fig. 1 in das Gehäuse gemäß Fig. 5;
- Fig. 11: das elastische Verformen der Frontwand des Filterelements gemäß Fig. 1 aufgrund der Beaufschlagung der Einführschräge des in Fig. 3 gezeigten Bauteils mit einer Kraft;
- Fig. 12: das Zurückspringen der Frontwand in ihren nicht verformten Ausgangszustand, in welchem ein auf Seiten des Gehäuses ausgebildetes Haltelement von dem Bauteil hintergriffen wird;
- Fig. 13: einen ersten Schritt beim Anbringen des Deckels gemäß Fig. 7 an dem Gehäuse gemäß Fig. 5, wobei in dem Aufnahmeraum des Gehäuses das Filterelement gemäß Fig. 1 angeordnet ist;
- Fig. 14: das Aufsetzen des Deckels auf das Gehäuse und das Verdrehen eines als Drehverschluss ausgebildeten Verschlusselements des Deckels,
- Fig. 15: ausschnittsweise und teilweise geschnitten das Gehäuse mit eingebautem Filterelement und an dem Gehäuse festgelegtem Deckel;
- Fig. 16: in einer teilweise geschnittenen Draufsicht den Zustand der Luftfiltereinrichtung gemäß Fig. 14; und
- Fig. 17: in einer teilweise geschnittenen Draufsicht den Zustand der Luftfiltereinrichtung gemäß Fig. 15, also mit in eine Schließstellung verbrachtem Drehverschluss.

In den Fig. sind gleiche oder funktionsgleiche Elemente mit gleichen Bezugszeichen versehen.

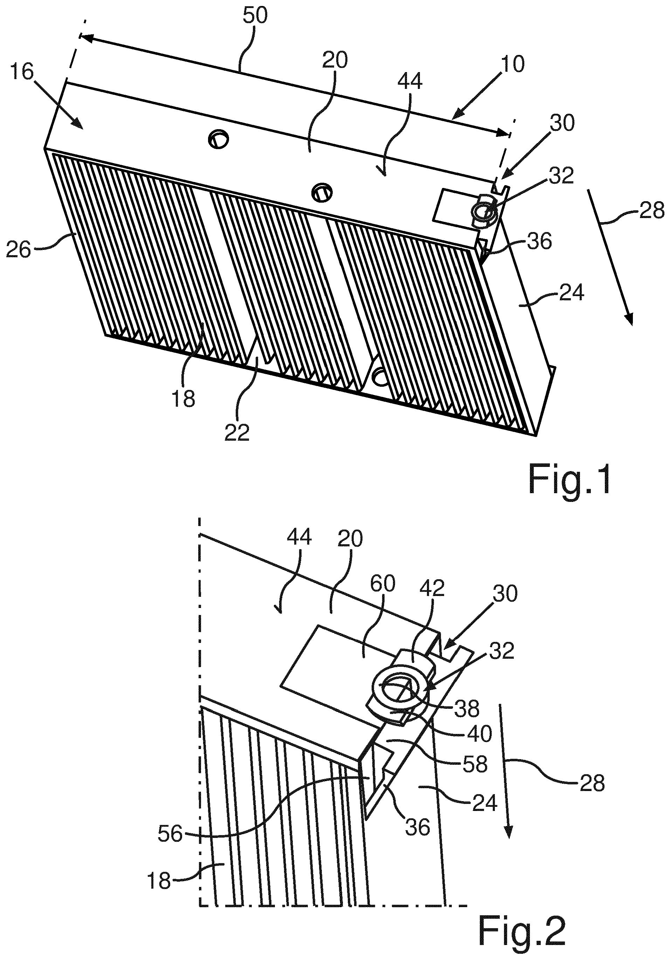

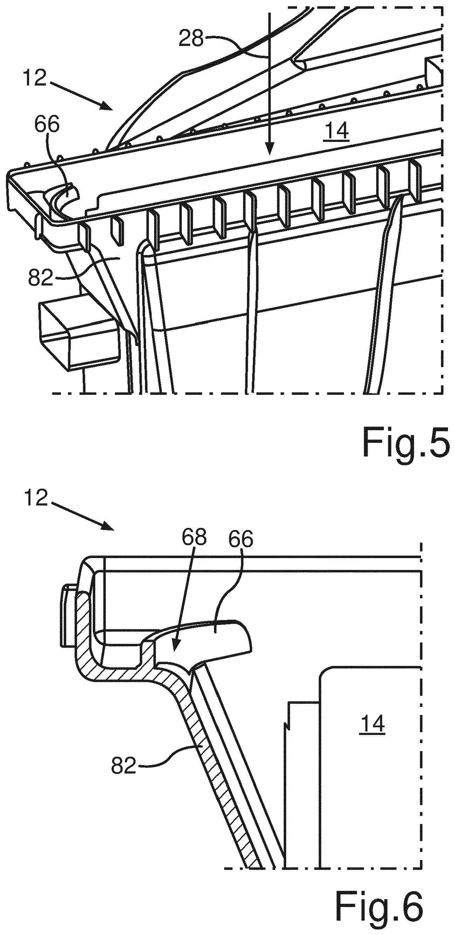

In Fig. 1 ist in einer schematischen Perspektivansicht ein Filterelement 10 gezeigt, welches zum Einbau in ein Gehäuse 12 (vergleiche Fig. 5) einer Luftfiltereinrichtung eines Kraftwagens vorgesehen ist. In dem Gehäuse 12 der Luftfiltereinrichtung ist ein Aufnahmeraum 14 ausgebildet (vergleiche Fig. 5), in welchen das in Fig. 1 gezeigte Filterelement 10 eingebracht oder eingebaut werden kann.

Das Filterelement 10 umfasst einen Rahmen 16, welcher ein Filtermaterial 18 des Filterelements 10 umgibt beziehungsweise einfasst. Bei Ausbildung des Filterelements 10 als Faltenfilter kann das Filtermaterial 18 wie vorliegend beispielhaft gezeigt eine Vielzahl von Falten aufweisen. Jedoch sind auch andere Ausgestaltungen des im Betrieb des Filterelements 10 von Luft durchströmbaren Filtermaterials 18 möglich.

Der Rahmen 16, welcher vorliegend das Filtermaterial 18 umfangsseitig vollständig umgibt beziehungsweise einschließt, umfasst eine Frontwand 20 und vorliegend eine der Frontwand 20 gegenüberliegende Rückwand 22. Die Frontwand 20 und die Rückwand 22 sind über zwei Seitenwände 24, 26 des Rahmens 16 miteinander verbunden.

Das Filterelement 10 kann in eine Einführrichtung 28 in den Aufnahmeraum 14 (vergleiche Fig. 5) eingeführt werden, welche in Fig. 1 durch einen Pfeil veranschaulicht ist. Dementsprechend erstrecken sich die Seitenwände 24, 26 von der Frontwand 20 ausgehend in die Einführrichtung 28 hin zu der Rückwand 22. Der Rahmen 16 ist also vorliegend im Wesentlichen rechteckig ausgebildet, wobei in Abhängigkeit von der Form des Aufnahmeraums 14 auch andere Formen des Rahmens 16 möglich sind.

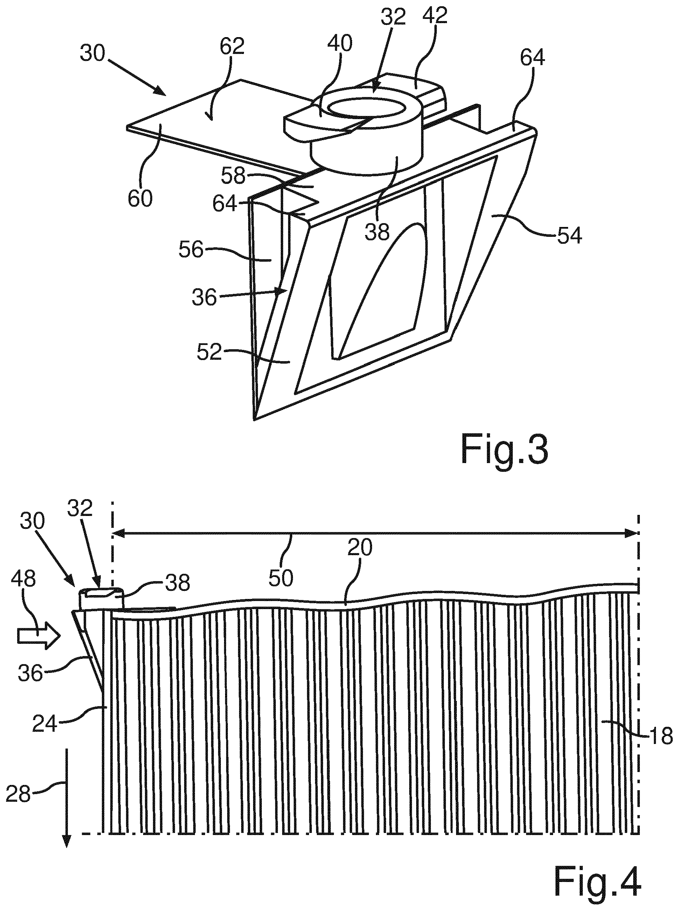

Im Bereich der Frontwand 20 ist an dem Rahmen 16 ein Bauteil 30 angeordnet, welches in Fig. 2 in einer vergrößerten Detailansicht des Rahmens 16 und in Fig. 3 nochmals perspektivisch und separat von dem Rahmen 16 gezeigt ist.

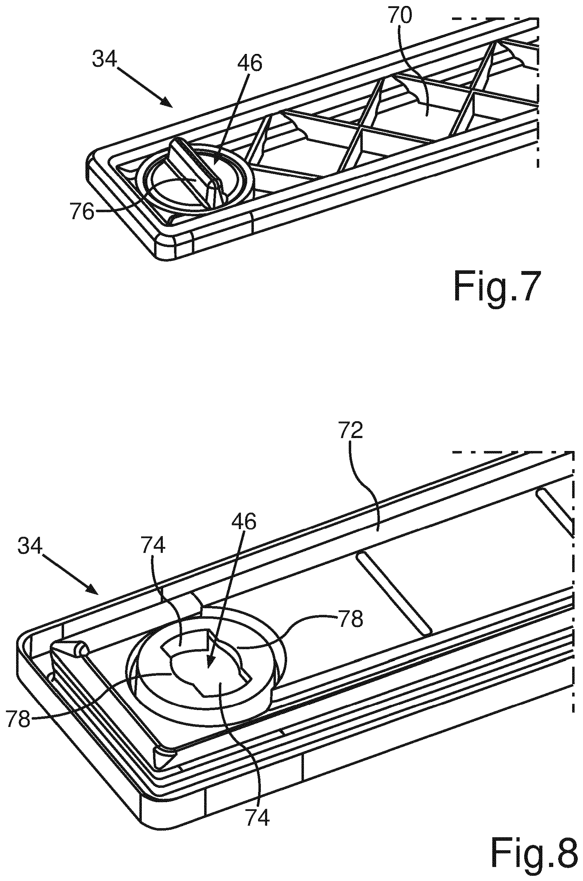

Durch das Bauteil 30 ist zum einen ein Befestigungselement 32 bereitgestellt, welches dem Festlegen eines Deckels 34 (vergleiche Fig. 7) an dem Gehäuse 12 dient. Des Weiteren ist durch das Bauteil 30 eine Einführschräge 36 bereitgestellt, deren Funktion unter Heranziehung von Fig. 4 näher erläutert werden soll.

Das vorliegend nach Art eines Zapfens 38 mit Halteteilen in Form eines ersten Flügels 40 und eines zweiten Flügels 42 ausgebildete Befestigungselement 32 steht über eine Frontseite 44 der Frontwand 20 über. An den von der Frontwand 20 beabstandeten Flügeln 40, 42 des Befestigungselements 32 kann der Deckel 34 mittels eines als Drehverschluss 46 (vergleiche Fig. 7) ausgebildeten Verschlusselements festgelegt werden. Folglich stellt das Befestigungselement 32 sicher, dass der Deckel 34 ausschließlich an dem Gehäuse 12 angebracht werden kann, wenn das Filterelement 10 in das Gehäuse 12 eingebaut ist, und zwar indem der Deckel 34 an dem Befestigungselement 32 des Filterelements 10 festgelegt wird.

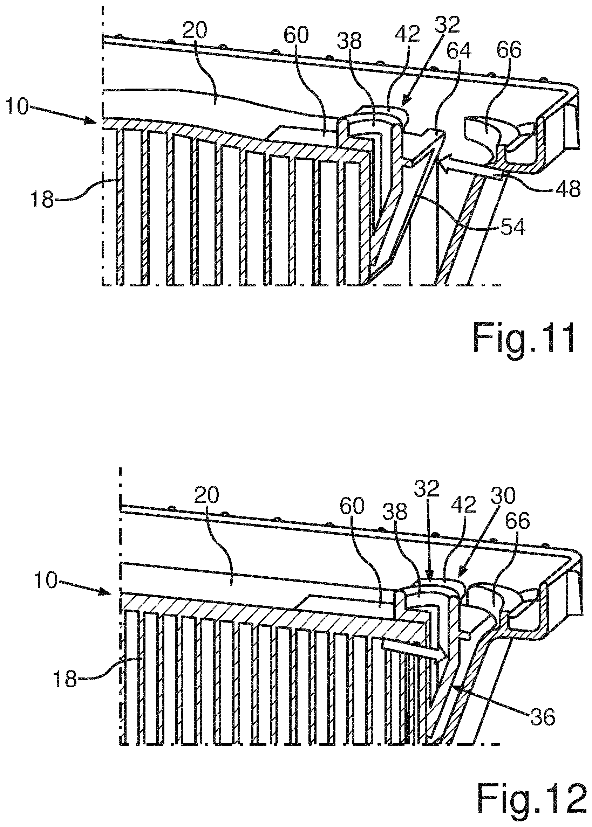

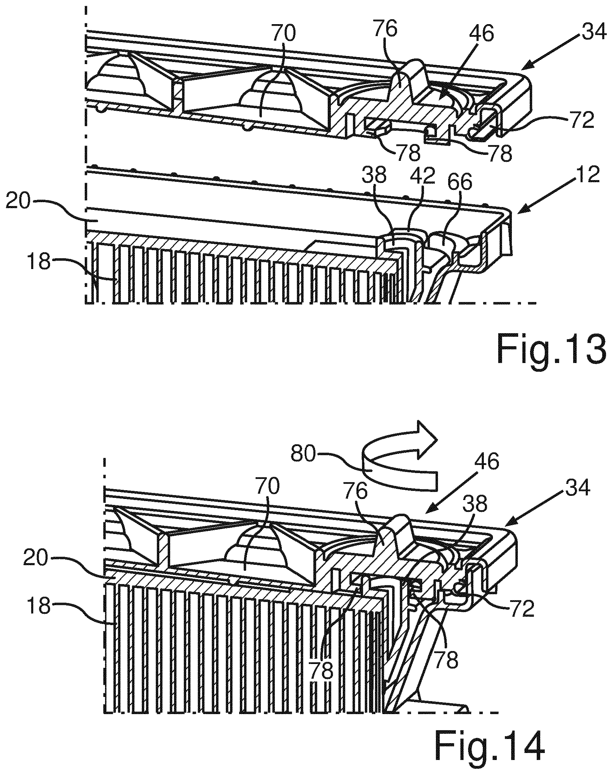

Des Weiteren wird mittels des die Einführschräge 36 aufweisenden Bauteils 30 eine Vorfixierung des Filterelements 10 in dem Aufnahmeraum 14 des Gehäuses 12 erreicht, solange der Deckel 34 noch nicht an dem Gehäuse 12 festgelegt ist (vergleiche Fig. 12 und Fig. 13).

Die Einführschräge 36 des Bauteils 30 sorgt beim Einführen bzw. Einschieben des Filterelements 10 in den in dem Gehäuse 12 ausgebildeten Aufnahmeraum 14 (vergleiche Fig. 5) in die Einführrichtung 28 zunächst für ein elastisches Verformen der Frontwand 20, da die Einführschräge 36 das Filterelement 10 gegenüber einer vorgesehenen Eingangsbreite des starren Aufnahmraums 14 verlängert ist, so dass beim Einschieben eine Kraft bzw. ein Druck auf die Einführschräge 36 ausgeübt wird, der auf die Frontwand 20 des Filterelements einwirkt. Das entsprechende Zusammenstauchen der Frontwand 20 ist in Fig. 4 schematisch dargestellt. Hierbei wird durch eine auf die Einführschräge 36 aufgebrachte Kraft, welche in Fig. 4 durch einen Pfeil 48 veranschaulicht ist, das Zusammenstauchen beziehungsweise das elastische Verformen der Frontwand 20 bewirkt.

In dem elastisch verformten beziehungsweise zusammengestauchten Zustand der Frontwand 20 ist eine von der Frontwand 20 senkrecht zu der Einführrichtung 28 eingenommene Längserstreckung 50 (vergleiche Fig. 1) geringer als in einem Ausgangszustand der Frontwand 20, in welchem die Frontwand 20 nicht verformt ist. Die verkürzte Längserstreckung 50 des Rahmens 16 senkrecht zu der Einführrichtung 28 im Bereich der Frontwand 20 wird, wie in Fig. 4 schematisch dargestellt ist, insbesondere dadurch bewirkt, dass die Frontwand 20 zu dem Filtermaterial 18 hin und/oder von dem Filtermaterial 18 weg gebogen oder verbogen wird. Diese beziehungsweise eine derartige elastische Verformung der Frontwand 20 wird vorliegend durch die Einführschräge 36, die durch das Bauteil 30 bereitgestellt ist, bewirkt. Die Einführschräge 36 wird zusammen mit dem Filterelement 10 durch eine engere Öffnung des Gehäuses 12 in den Aufnahmeraum 14 gezwängt, in welchem wieder genügend Raum vorhanden ist, so dass sich das Filterelement 10 wieder in seine ursprüngliche Gestalt ausdehnen kann.

Beispielsweise kann die Einführschräge 36 zwei Führungsflanken 52, 54 umfassen (vergleiche Fig. 3), welche schräg zu der Seitenwand 24 ausgerichtet sind (vergleiche Fig. 4), in deren Endbereich das Bauteil 30 an der Frontwand 20 angebracht ist. Auf diese Führungsflanken 52, 54 wird vorliegend die Kraft (vergleiche Pfeil 48) aufgebracht, welche das Zusammenstauchen beziehungsweise elastische Verformen der Frontwand 20 bewirkt.

Die Einführschräge 36 umfasst vorliegend des Weiteren ein plattenförmiges Basisteil 56, welches an der Seitenwand 24 des Rahmens 16 anliegt (vergleiche Fig. 2 und Fig. 4). Zwischen dem Basisteil 56 und den Führungsflanken 52, 54 ist ein Versteifungselement 58 der Einführschräge 36 angeordnet (vergleiche Fig. 3). Dadurch ist der Einführschräge 36 insgesamt eine hohe Steifigkeit beziehungsweise Starrheit verliehen. Mit anderen Worten können die Führungsflanken 52, 54 nicht auf das plattenförmige Basisteil 56 zu bewegt werden, wenn die Frontwand 20 senkrecht zu der Einführrichtung 28 beziehungsweise in Richtung der Längserstreckung 50 im Bereich des Bauteils 30 mit der Kraft beaufschlagt wird, welche in Fig. 4 durch den Pfeil 48 veranschaulicht ist.

Die Einführschräge 36 beziehungsweise das Bauteil 30 weist darüber hinaus einen Anlageflansch 60 auf, welcher sich entlang der Frontwand 20 erstreckt und an der Frontseite 44 der Frontwand 20 anliegt beziehungsweise auf der Frontseite 44 der Frontwand 20 aufliegt.

Eine Oberseite 62 des Anlageflansches 60 und des Versteifungselements 58 sind einer Stirnseite der Einführschräge 36 zugehörig, welche mit der Frontwand 20 fluchtet. Im Bereich der Führungsflanken 52, 54 sind durch diese Stirnseite der Einführschräge 36 Widerlager 64 bereitgestellt. Die Widerlager 64 hintergreifen bei in den Aufnahmeraum 14 eingebrachtem Filterelement 10 ein jeweiliges Halteelement 66, welches auf Seiten des Luftfiltergehäuses 12 bereitgestellt oder ausgebildet ist (vergleiche Fig. 5 und Fig. 6).

Insbesondere aus Fig. 6 ist diesbezüglich ersichtlich, dass das jeweilige Halteelement 66 einer als Haltemulde 68 ausgebildeten Aufnahme zugehörig ist, in welche der Schaft oder Zapfen 38 des Befestigungselements 32 zusammen mit den Flügeln 40, 42 eingebracht werden kann. Die Halteelemente 66 sind hierbei nach Art von Armen ausgebildet, welche einen Aufnahmeraum der Haltemulde 68 in Umfangsrichtung teilweise begrenzen, in welchem das Befestigungselement 32 angeordnet werden kann.

Die als Aufnahme für das Befestigungselement 32 dienende Haltemulde 68 ist vorliegend an einer seitlichen Gehäusewand 82 des Gehäuses 12 ausgebildet. Insbesondere kann die Haltemulde 68 einstückig mit der Gehäusewand 82 ausgebildet sein (vergleiche Fig. 5 und Fig. 6), welche den Aufnahmeraum 14 zu einer Seite hin begrenzt.

In Fig. 7 ist der Deckel 34 der Luftfiltereinrichtung in einer Ansicht von außen gezeigt. Dementsprechend umfasst der Deckel 34 einen Grundköper 70 und den relativ zu dem Grundköper 70 verdrehbaren Drehverschluss 46.

In Fig. 8 ist der Drehverschluss 46 in einer Ansicht auf seine Unterseite gezeigt, welche dem Aufnahmeraum 14 zugewandt ist. Ebenso ist in Fig. 8 von dem Grundköper 70 des Deckels 34 diejenige Seite zu sehen, welche bei an dem Gehäuse 12 angebrachtem Deckel 34 dem Aufnahmeraum 14 zugewandt ist. Dementsprechend kann der Deckel 34 an dieser Unterseite ein Dichtelement 72 aufweisen.

Des Weiteren ist in Fig. 8 erkennbar, dass in dem Drehverschluss 46 Ausnehmungen 74 ausgebildet sind, deren Konturen einer jeweiligen Kontur der an dem Befestigungselement 32 ausgebildeten Flügel 40, 42 entsprechen (vergleiche Fig. 3).

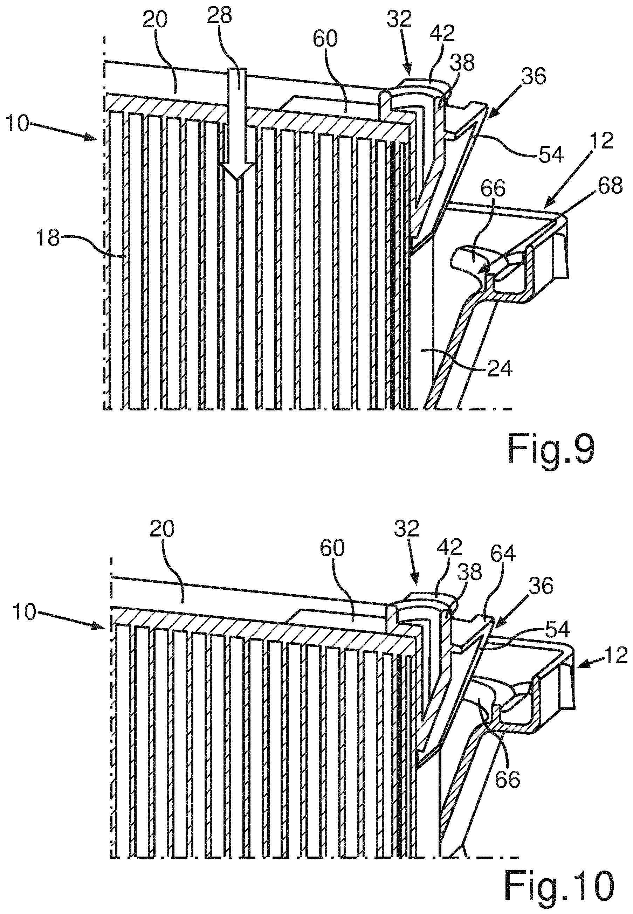

Die Montage des Filterelements 10 in die Luftfiltereinrichtung, beziehungsweise das Einbringen des Filterelements 10 in den Aufnahmeraum 14 des Luftfiltergehäuses 12, derart, dass das Befestigungselement 32 in die Haltemulde 68 gelangt und hierbei die Widerlager 64 die jeweiligen Halteelemente 66 der Haltemulde 68 hintergreifen, wird im Folgenden mit Bezug auf Fig. 9 bis Fig. 12 erläutert.

Gemäß Fig. 9 wird das Filterelement 10 in die Einführrichtung 28 in das Gehäuse 12 eingeschoben. Dadurch gelangt jeweils eine der Führungsflanken 52, 54 in Anlage mit einem jeweiligen Halteelement 66 der Haltemulde 68 (vergleiche Fig. 10). Die beim weiteren Einführen in die Einführrichtung 28 auf die Einführschräge 36 aufgebrachte Kraft bewirkt das elastische Verformen der Frontwand 20. Dies ist übertrieben in Fig. 11 dargestellt, wobei in Fig. 11 sowie in Fig. 4 durch den Pfeil 48 die auf die Einführschräge 36 wirkende Kraft veranschaulicht ist.

Die gemäß Fig. 11 zusammengestauchte beziehungsweise elastisch verformte Frontwand 20 nimmt dann gemäß Fig. 12 wieder ihren Ausgangszustand ein, in welchem die Frontwand 20 nicht verformt, sondern wieder gerade ausgerichtet ist. Durch dieses Zurückschnappen der Frontwand 20 in den Ausgangszustand gelangen die Widerlager 64 hinter die im Bereich der Haltemulde 68 ausgebildeten Halteelemente 66. Die Einführschräge 36 hinterschneidet die Haltemulde 68 somit formschlüssig. Das Filterelement 10 hat dann die vorbestimmte Endlage in dem Aufnahmeraum 14 des Gehäuses 12 erreicht.

Mit dem Erreichen der Endlage des Filterelements 10 hinterrasten also die Widerlager 64 hinterschnittig die Halteelemente 66, welche an der Haltemulde 68 ausgebildet sind. Dadurch sind auch die Flügel 40, 42 lagerichtig ausgerichtet, durch welche eine Spanngeometrie und eine Haltegeometrie des Befestigungselements 32 bereitgestellt sind, und der Deckel 34 kann montiert werden.

Anhand von Fig. 13 bis Fig. 15 soll diese Befestigung des Deckels 34 an dem Gehäuse 12 veranschaulicht werden. Gemäß der Schnittansicht in Fig. 13 wird zunächst der Deckel 34 auf das Gehäuse 12 aufgesetzt, wobei die mit den Flügeln 40, 42 korrespondierenden Ausnehmungen 74 des Drehverschlusses 46 ineinandergreifen.

Dann kann der Drehverschluss 46 an einem Steg oder dergleichen Griffteil 76 (vergleiche Fig. 7) gegriffen und verdreht werden (vergleiche Fig. 14).

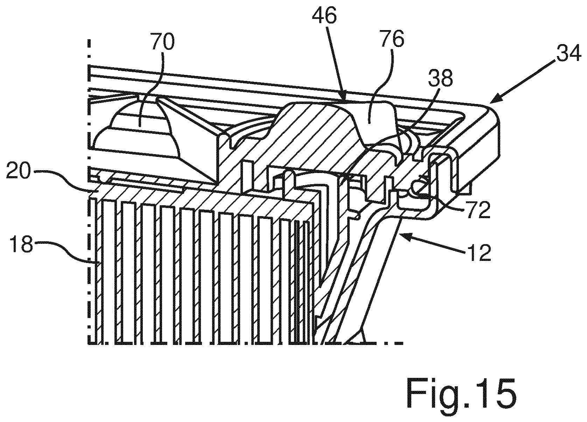

Dabei werden dann auch die zwei Halteteile 78 (vergleiche Fig. 8) des Drehverschlusses 46 mit gedreht, so dass sie die Flügel 40, 42 an dem Zapfen 38 am Bauteil 30 des Filterelements 10 hintergreifen. Dieses Drehen des Drehverschlusses 46 ist in Fig. 14 dargestellt, wobei eine Drehrichtung des Drehverschlusses 46 durch einen gekrümmten Pfeil 80 veranschaulicht ist. In Fig. 15 ist der Drehverschluss 46 dann in seiner Schließstellung gezeigt.

Indem die Halteteile 78 des Drehverschlusses 46 die Flügel 40, 42 des Befestigungselements 32 hintergreifen, wird vorliegend der Deckel 34 dicht sitzend an das Gehäuse 12 gezogen. Denn die Widerlager 64, welche an der Stirnseite der Einführschräge 36 bereitgestellt sind (vergleiche Fig. 3), liegen an den Halteelementen 66 der Haltemulde 68 an.

Die Halteteile 78 des Drehverschlusses 46 korrespondieren mit den Flügeln 40, 42, welche die Spanngeometrie und die Haltegeometrie des Befestigungselements 32 bilden. Insbesondere aus Fig. 3 ist diesbezüglich ersichtlich, dass die Flügel 40, 42 sich entgegen der Drehrichtung des Drehverschlusses 46, welche in Fig. 14 durch den Pfeil 80 veranschaulicht ist, rampenförmig verjüngend ausgebildet sein können. Dementsprechend laufen die Halteteile 78 des Drehverschlusses 46 auf die jeweiligen Rampen der Flügel 40, 42 auf, wenn die Halteteile 78 die Flügel 40, 42 hintergreifen und der Drehverschluss 46 weiter in die durch den Pfeil 80 veranschaulichte Drehrichtung gedreht wird. Dadurch wird eine besonders hohe Dichtigkeit zwischen Deckel 34 und Gehäuse 12 erreicht, da das hinterschnittig am Halteelement 66 des Gehäuses 12 gehaltene Befestigungselement 32 mit den rampenförmigen Flügeln 40, 42 beim Eindrehen der Halteteile 78 ein Heranziehen des Deckels 34 an das Gehäuse 12 bewirken.

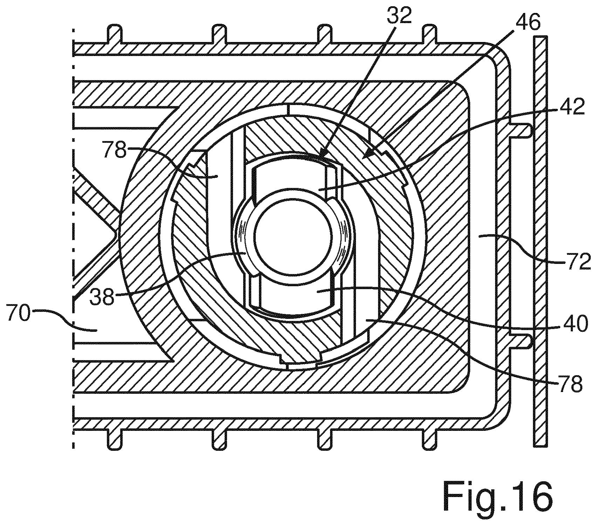

In Fig. 16 ist der Deckel 34 im Bereich des Drehverschlusses 46 geschnitten dargestellt. Hierbei ist in Fig. 16 die Ausrichtung des Drehverschlusses 46 veranschaulicht, welche der Drehverschluss 46 in Fig. 14 aufweist. Folglich hintergreifen die Halteteile 78 noch nicht die Flügel 40, 42.

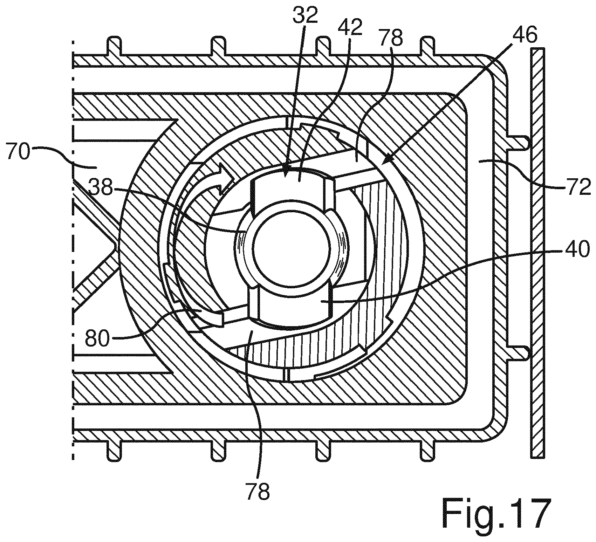

In Fig. 17 ist demgegenüber der Drehverschluss 46 in seiner Schließstellung gezeigt, in welcher die Halteteile 78 die Flügel 40, 42 hintergreifen. Die hierbei erreichte Hinterschneidung sorgt für eine formschlüssige Festlegung des Deckels 34 an dem Gehäuse 12 durch das Zusammenwirken des Drehverschlusses 46 mit dem Befestigungselement 32.

Bei der Demontage wird der Drehverschluss 46 wieder in seine in Fig. 14 gezeigte Offenstellung gebracht. Dann kann der Deckel 34 von dem Gehäuse 12 abgenommen werden. Anschließend kann das Filterelement 10 aus dem Aufnahmeraum 14 entnommen werden, indem die Frontwand 20, wie in Fig. 4 schematisch gezeigt, wieder elastisch verformt wird, was beispielsweise durch einen händischen Eingriff in das Filtermaterial 18 geschehen kann, durch welchen das Filtermaterial 18 zusammen mit der daran anhaftenden Frontwand 20 zusammengezogen wird.

## Patentansprüche

1. Filterelement für eine Luftfiltereinrichtung eines Kraftwagens, mit einem Rahmen (16), welcher ein Filtermaterial (18) des Filterelements (10) zumindest bereichsweise umgibt, wobei der Rahmen (16) eine elastisch verformbare Frontwand (20) umfasst, welche sich senkrecht zu einer Einführrichtung (28) erstreckt, in welche das Filterelement (10) in einen Aufnahmeraum (14) eines Gehäuses (12) der Luftfiltereinrichtung einführbar ist, und wobei an dem Rahmen (16) wenigstens ein Befestigungselement (32) angeordnet ist, an welchem ein zum Verschließen des Aufnahmeraums (14) ausgebildeter Deckel (34) der Luftfiltereinrichtung festlegbar ist,
**dadurch gekennzeichnet, dass**
an dem Rahmen (16) wenigstens eine Einführschräge (36) ausgebildet ist, mittels welcher beim Einführen des Filterelements (10) in den Aufnahmeraum (14) ein Verbringen der Frontwand (20) in einen elastisch verformten Zustand bewirkbar ist, in welchem eine Längserstreckung (50) der Frontwand geringer ist als in einem unverformten Ausgangszustand der Frontwand (20), und das Befestigungselement (32) einstückig mit einem die Einführschräge (36) umfassenden und in sich starren Bauteil (30) des Filterelements (10) ausgebildet ist, wobei das Befestigungselement (32) an der Frontwand (20) angeordnet und entgegen der Einführrichtung (28) von der Frontwand (20) abstehend ausgebildet ist.

2. Filterelement nach Anspruch 1,
**dadurch gekennzeichnet, dass**
die Einführschräge (36) eine Keilform aufweist, die in einem der Frontwand (20) nahen Endbereich eine größere Breite in Richtung der Längserstreckung (50) der Frontwand (20) aufweist als in einem der Frontwand (20) fernen Endbereich der Einführschräge (36), die durch wenigstens eine schräg zu einer Seitenwand (24) des Rahmens (16) ausgerichtete Führungsflanke (52, 54) gebildet wird.

3. Filterelement nach einem der Ansprüche 1 bis 2, **dadurch gekennzeichnet, dass**
das Bauteil (30) einen Anlageflansch (60) aufweist, welcher an der Frontwand (20) anliegt, und ein Basisteil (56), welches an der Seitenwand (24) des Rahmens (16) anliegt.

4. Filterelement nach Anspruch 3,
**dadurch gekennzeichnet, dass**
die Einführschräge (36) ein Versteifungselement (58) umfasst, welches zwischen dem Basisteil (56) und der wenigstens einen Führungsflanke (52, 54) der Einführschräge (36) angeordnet ist.

5. Filterelement nach einem der Ansprüche 1 bis 4,
**dadurch gekennzeichnet, dass**
die Einführschräge (36) eine Stirnseite (62) aufweist, durch welche ein Widerlager (64) bereitgestellt ist, welches bei in den Aufnahmeraum (14) eingebrachtem Filterelement (10) zum Hintergreifen eines Halteelements (66) des Gehäuses (12) der Luftfiltereinrichtung ausgebildet ist.

6. Filterelement nach einem der Ansprüche 1 bis 5,
**dadurch gekennzeichnet, dass**
das wenigstens eine Befestigungselement (32) zumindest ein Halteteil (40, 42) aufweist, welches von einem korrespondierenden Halteteil (78) eines Deckels (34) zu dessen Festlegung an dem Gehäuse (12) der Luftfiltereinrichtung hintergreifbar ist.

7. Luftfiltereinrichtung für einen Kraftwagen, mit einem Filterelement (10) nach einem der Ansprüche 1 bis 6, wobei das Filterelement (10) in einen Aufnahmeraum (14) eingebracht ist, welcher in einem Gehäuse (12) der Luftfiltereinrichtung ausgebildet ist, wobei der Aufnahmeraum (14) mittels eines Deckels (34) der Luftfiltereinrichtung verschließbar ist, welcher an dem wenigstens einen Befestigungselement (32) des Filterelements (10) festlegbar ist.

8. Luftfiltereinrichtung nach Anspruch 7,
**dadurch gekennzeichnet, dass**
an wenigstens einer Gehäusewand (82) des Gehäuses (12) eine Aufnahme (68) ausgebildet ist, in welche das wenigstens eine Befestigungselement (32) aufgenommen ist, wobei die Aufnahme (68) ein Halteelement (66) umfasst, mit welchem das Widerlager (64) der Einführschräge (36) in Anlage ist.

9. Luftfiltereinrichtung nach Anspruch 7 oder 8,
**dadurch gekennzeichnet, dass**
der Deckel (34) ein Verschlusselement (46) aufweist, welches relativ zu einem Grundköper (70) des Deckels (34) drehbar ist, wobei in einer Schließstellung des Verschlusselements (46) wenigstens ein Halteteil (78) des Verschlusselements (46) ein korrespondierendes Halteteil (40, 42) des Befestigungselements (32) hintergreift.

## Claims

1. Filter element for an air filter device of a motor vehicle, comprising a frame (16) which surrounds a filter material (18) of the filter element (10) at least in regions, the frame (16) comprising an elastically deformable front wall (20), which extends perpendicularly to an insertion direction (28), into which the filter element (10) can be inserted into a receiving space (14) of a housing (12) of the air filter device, and at least one fastening element (32) being arranged on the frame (16), on which fastening element a lid (34) of the air filter device designed to close the receiving space (14) can be fixed,
**characterized in that**
at least one insertion bevel (36) is formed on the frame (16), by means of which insertion bevel, when the filter element (10) is inserted into the receiving space (14), the front wall (20) can be brought into an elastically deformed state in which a longitudinal extension (50) of the front wall is smaller than in an undeformed initial state of the front wall (20), and the fastening element (32) is formed integrally with a component (30) of the filter element (10) which comprises the insertion bevel (36) and is inherently rigid, wherein the fastening element (32) is arranged on the front wall (20) and is designed to protrude from the front wall (20) counter to the insertion direction (28).

2. Filter element according to claim 1,
**characterized in that**
the insertion bevel (36) has a wedge shape which, in an end region close to the front wall (20), has a greater width in the direction of the longitudinal extension (50) of the front wall (20) than in an end region of the insertion bevel (36) remote from the front wall (20), which insertion bevel is formed by at least one guide flank (52, 54) oriented obliquely to a side wall (24) of the frame (16).

3. Filter element according to any of claims 1 to 2,
**characterized in that**
the component (30) has a contact flange (60) which abuts the front wall (20), and a base part (56) which abuts the side wall (24) of the frame (16).

4. Filter element according to claim 3,
**characterized in that**
the insertion bevel (36) comprises a stiffening element (58) which is arranged between the base part (56) and the at least one guide flank (52, 54) of the insertion bevel (36).

5. Filter element according to any of claims 1 to 4,
**characterized in that**
the insertion bevel (36) has an end face (62) which provides an abutment (64) which is designed to engage behind a retaining element (66) of the housing (12) of the air filter device when the filter element (10) is introduced into the receiving space (14).

6. Filter element according to any of claims 1 to 5,
**characterized in that**
the at least one fastening element (32) has at least one retaining part (40, 42) behind which a corresponding retaining part (78) of a lid (34) can engage for fixing said lid to the housing (12) of the air filter device.

7. Air filter device for a motor vehicle, comprising a filter element (10) according to any of claims 1 to 6, wherein the filter element (10) is introduced into a receiving space (14) which is formed in a housing (12) of the air filter device, wherein the receiving space (14) can be closed by means of a lid (34) of the air filter device which can be fixed to the at least one fastening element (32) of the filter element (10).

8. Air filter device according to claim 7,
**characterized in that**
a receptacle (68) is formed on at least one housing wall (82) of the housing (12), into which receptacle the at least one fastening element (32) is received, the receptacle (68) comprising a retaining element (66) with which the abutment (64) of the insertion bevel (36) is in contact.

9. Air filter device according to claim 7 or 8,
**characterized in that**
the lid (34) has a closure element (46) which can be rotated relative to a main body (70) of the lid (34), at least one retaining part (78) of the closure element (46) engaging behind a corresponding retaining part (40, 42) of the fastening element (32) in a closed position of the closure element (46).

## Revendications

1. Elément filtrant pour un dispositif de filtre à air d'un véhicule automobile, comportant un cadre (16), lequel entoure au moins par zones un matériau filtrant (18) de l'élément filtrant (10), le cadre (16) comprenant une paroi frontale (20) élastiquement déformable, laquelle s'étend perpendiculairement à une direction d'introduction (28), dans laquelle l'élément filtrant (10) peut être introduit dans un espace de réception (14) d'un boitier (12) du dispositif de filtre à air, au moins un élément de fixation (32) étant disposé sur le cadre (16), sur lequel un couvercle (34) du dispositif de filtre à air, réalisé pour la fermeture de l'espace de réception (14), peut être fixé,
**caractérisé en ce que**
au moins une rampe d'introduction (36) est réalisée sur le cadre (16), au moyen de laquelle, lors de l'introduction de l'élément filtrant (10) dans l'espace de réception (14), une mise de la paroi frontale (20) dans un état élastiquement déformé peut être effectuée, dans lequel une extension longitudinale (50) de la paroi frontale est inférieure à celle dans un état initial non déformé de la paroi frontale (20), et l'élément de fixation (32) est réalisé d'une seule pièce avec un composant (30) de l'élément filtrant (10) comprenant la rampe d'introduction (36) et rigide en soi, l'élément de fixation (32) étant disposé sur la paroi frontale (20) et étant réalisé faisant saillie à partir de la paroi frontale (20) dans la direction opposée à la direction d'introduction (28).

2. Élément filtrant selon la revendication 1,
**caractérisé en ce que**
la rampe d'introduction (36) présente une forme de coin, qui présente dans une zone terminale proche de la paroi frontale (20) une largeur dans la direction de l'extension longitudinale (50) de la paroi frontale (20) supérieure à celle dans une zone terminale de la rampe d'introduction (36) éloignée de la paroi frontale (20), qui est formée par au moins flanc de guidage (52, 54) orienté obliquement par rapport à une paroi latérale (24) du cadre (16).

3. Élément filtrant selon l'une des revendications 1 à 2,
**caractérisé en ce que**
le composant (30) présente une bride de pression (60), laquelle est en appui sur la paroi frontale (20), et une partie de base (56), laquelle est en appui sur la paroi latérale (24) du cadre (16).

4. Élément filtrant selon la revendication 3,
**caractérisé en ce que**
la rampe d'introduction (36) comprend un élément de raidissement (58), lequel est disposé entre la partie de base (56) et l'au moins une bride de guidage (52, 54) de la rampe d'introduction (36).

5. Élément filtrant selon l'une des revendications 1 à 4,
**caractérisé en ce que**
la rampe d'introduction (36) présente une face avant (62), à travers laquelle un palier de butée (64) est mis à disposition, lequel, lorsque l'élément filtrant (10) est introduit dans l'espace de réception (14), est réalisé pour entrer en prise derrière un élément de support (66) du boitier (12) du dispositif de filtre à air.

6. Elément filtrant selon l'une des revendications 1 à 5,
**caractérisé en ce que**
l'au moins un élément de fixation (32) présente au moins une partie de support (40, 42), laquelle peut être mise en prise par derrière par une partie de support (78) correspondante d'un couvercle (34) pour sa fixation au boitier (12) du dispositif de filtre à air.

7. Dispositif de filtre à air pour un véhicule automobile, comportant un élément filtrant (10) selon l'une des revendications 1 à 6, l'élément filtrant (10) étant introduit dans un espace de réception (14), lequel est réalisé dans un boitier (12) du dispositif de filtre à air, l'espace de réception (14) pouvant être fermé au moyen d'un couvercle (34) du dispositif de filtre à air, lequel peut être fixé sur l'au moins un élément de fixation (32) de l'élément filtrant (10).

8. Dispositif de filtre à air selon la revendication 7,
**caractérisé en ce que**
une réception (68) est réalisée sur au moins une paroi de boitier (82) du boitier (12), dans laquelle l'au moins un élément de fixation (32) est reçu, la réception (68) comprenant un élément de support (66), avec lequel le palier de butée (64) de la rampe d'introduction (36) est en appui.

9. Dispositif de filtre à air selon la revendication 7 ou 8,
**caractérisé en ce que**
le couvercle (34) présente un élément de fermeture (46), lequel peut tourner par rapport à un corps de base (70) du couvercle (34), dans une position fermée de l'élément de fermeture (46), au moins une partie de support (78) de l'élément de fermeture (46) entrant en prise par derrière avec une partie de support (40, 42) correspondante de l'élément de fixation (32).
